# EUROPÄISCHE PATENTSCHRIFT

(11) **EP 1 203 673 B1**
(45) Veröffentlichungstag und Bekanntmachung des Hinweises auf die Patenterteilung: **09.02.2005**
(21) Anmeldenummer: 01126078.3
(22) Anmeldetag: 02.11.2001
(51) Int. Cl.: B60C 11/11

(54) **Fahrzeugreifen**
Vehicle tyre
Pneumatique pour véhicules

(30) Priorität: 04.11.2000 DE 10054694
(43) Veröffentlichungstag der Anmeldung: 08.05.2002
(73) Patentinhaber: Continental Aktiengesellschaft, 30165 Hannover (DE)
(72) Erfinder: Hartwig, Matthias, 26919 Brake (DE)

(56) Entgegenhaltungen:
- EP-A- 1 016 556
- DE-A- 4 026 486
- PATENT ABSTRACTS OF JAPAN vol. 1996, no. 05, 31. Mai 1996 (1996-05-31) -& JP 08 020205 A (BRIDGESTONE CORP), 23. Januar 1996 (1996-01-23)
- PATENT ABSTRACTS OF JAPAN vol. 016, no. 446 (M-1311), 17. September 1992 (1992-09-17) & JP 04 154408 A (YOKOHAMA RUBBER CO LTD:THE), 27. Mai 1992 (1992-05-27)

## Beschreibung

Die Erfindung betrifft einen Fahrzeugreifen mit einem Laufstreifenprofil mit zumindest einem in Umfangsrichtung umlaufenden Laufstreifenbereich, in welchem erste Profilstrukturen, beispielsweise Rippen oder Rillen, angeordnet sind, die unter einem von der Umfangsrichtung bis zu 40° abweichenden Winkel orientiert sind, wobei in kreuzender Anordnung zu den ersten Profilstrukturen zweite Profilstrukturen, insbesondere Quernuten, vorgesehen sind, und wobei die ersten und die zweiten Profilstrukturen in Umfangsrichtung aufeinander folgende gleichartige Pitches unterschiedlicher Umfangslängen bilden.

Derartige Laufstreifenprofile sind insbesondere für PKW Reifen in verschiedenen Ausführungen bekannt. Die ersten Profilstrukturen können Rillen sein, die unter einem vergleichsweise kleinen Winkel in der Größenordnung von beispielsweise 20° zur Umfangsrichtung geneigt sind und sich über einen Laufstreifenbereich, welcher beispielsweise eine Laufstreifenhälfte ist, erstrecken. Mit diesen Rillen können in kreuzender Anordnung Quernuten kombiniert sein, welche die zweiten Profilstrukturen bilden, wobei jede Rille von einer Anzahl von Quernuten geschnitten sein kann. Die Quernuten können jedoch auch in die Rillen münden ohne diese zu schneiden.

Zur Verminderung des Reifen/Fahrbahngeräusches und zur subjektiven Optimierung desselben ist es üblich, Laufstreifenprofile von Fahrzeugreifen derart auszulegen, dass sie sich über den Reifenumfang aus einer bestimmten Aufeinanderfolge gleichartig ausgeführter Profilabschnitte, so genannter Pitches, die in verschiedenen Umfangslängen vorgesehen werden, zusammensetzen. Für derartige Pitches werden im Allgemeinen zwischen drei und fünf unterschiedliche Umfangslängen gewählt, deren maximales Längenverhältnis zueinander vorab bestimmt bzw. festgelegt wird und deren günstigste Aufeinanderfolge mittels entsprechender Rechenprogramme ermittelbar ist. Je nach Profilgestaltung oder Einsatzzweck des Fahrzeugreifens ist es dabei auch üblich, bei ein und demselben Reifen in unterschiedlichen Laufstreifenbereichen unterschiedliche Pitchfolgen und unterschiedlich gestaltete Pitches vorzusehen. In der Patentliteratur ist zum Thema Optimierung der Anordnung von Pitches und zum Thema Pitchfolgen eine Vielzahl von Lösungsvorschlägen aufzufinden, wobei in diesem Zusammenhang beispielsweise auf die EP-A-0 475 929, die EP-A-0 454 658 und die DE-A-34 450 41 verwiesen wird. Weiterhin ist ein gattungsgemäßer Reifen aus der JP-A-08 020205 bekannt.

Problematisch ist die Gliederung eines Laufstreifenprofils der eingangs genannten Art in gleichartige Profilabschnitte, um eine geräuschmäßig günstige Anordnung derselben zu erzielen. Bei der üblichen und herkömmlichen Art, Pitchgrenzen zu legen, lässt es sich nicht vermeiden, dass entweder die ersten Profilstrukturen oder die zweiten Profilstrukturen verzerrt werden oder ein die Optik und die Funktion störender Versatz von Profilstrukturen in Kauf genommen werden muss.

Die grundsätzlich bestehende Möglichkeit, eine Verpitchung des Profils ohne Regelmäßigkeiten vorzunehmen, wird aus diesem Grund nicht in Betracht gezogen, da die Umsetzung - Erstellung der Formenzeichnungen, Anfertigung der Reifenformen - extrem teuer und nicht wirtschaftlich wäre.

Der Erfindung liegt nun die Aufgabe zu Grunde, bei einem Laufstreifenprofil der eingangs genannten Art eine für das Reifen/Fahrbahngeräusch günstige Gliederung des Profils in gleichartige und über den Umfang wiederholbare Pitches vornehmen zu können, wobei eine Realisierung mit vertretbarem, insbesondere sogar mit geringem Aufwand möglich sein soll.

Gelöst wird die gestellte Aufgabe erfindungsgemäß durch einen Fahrzeugreifen nach Anspruch 1.

Nach der Erfindung lässt sich eine Gliederung des Laufstreifens in Profilabschnitte unterschiedlicher Umfangslängen vornehmen, die es ermöglicht, auf einfache Weise eine geräuschmäßig günstige Aufeinanderfolge dieser Profilabschnitte zu ermitteln. Durch die zahlenmäßige Begrenzung der gegenseitigen Abstände der zweiten, an Pitchgrenzabschnitten geteilten Profilstrukturen wird eine gewisse Anzahl unterschiedlicher Profilabschnitte bestimmt. Dadurch wird es möglich, auch für Laufstreifenprofile der eingangs genannten Art ohne Verzerrung der Profilstrukturen eine günstige Pitchfolge aus einer begrenzten Anzahl unterschiedlicher Pitches zu ermitteln, sodass eine einfache Erstellung der Formenzeichnungen und in weiterer Folge auch eine wirtschaftliche Herstellung der zugehöriger Reifenformen sichergestellt sind.

Der Verlauf der Pitchgrenzen wird bevorzugt derart gewählt, dass von den zweiten Profilstrukturen zumindest zwei an einem der Laufstreifenmitte zugewandten Pitchgrenzabschnitt und zumindest zwei an einem dem Laufstreifenrand zugewandten Pitchgrenzabschnitt geteilt sind. Dies verleiht den einzelnen Basispitches eine ganz bestimmte und charakteristische Gestalt und ermöglicht eine bestimmte Aneinanderreihung der Basispitches.

Um die erforderliche Anzahl unterschiedlicher Basispitches und damit auch Kombinationen ihrer Aufeinanderfolge über den Reifenumfang auf ein überschaubares Maß zu begrenzen, erfolgen die Anordnung und der Verlauf der zweiten Profilstrukturen bevorzugt nach einem bestimmten Muster, bei dem der gegenseitige Abstand der an einem der Laufstreifenmitte zugewandten Pitchgrenzabschnitt geteilten zweiten Profilstrukturen innerhalb einer Art von Basispitches jeweils übereinstimmend gewählt wird.

In weiterer Folge wird darauf geachtet, dass der gegenseitige Abstand bzw. die gegenseitigen Abstände der an einem dem Laufstreifenrand zugewandten Pitchgrenzabschnitt geteilten zweiten Profilstrukturen in den Pitches einer Art von Basispitches verschieden ist bzw. sind, aber mit zumindest einer Art von gegenseitigem Abstand bzw. gegenseitigen Abständen der zweiten Profilstrukturen, die an dem der Laufstreifenmitte zugewandten Pitchgrenzabschnitt geteilt sind, übereinstimmt. Damit werden ganz bestimmte Möglichkeiten der Aufeinanderfolge von Basispitches gestattet, wobei durch die jeweilige Abstimmung der Abstände der zweiten Profilstrukturen auch darauf geachtet werden kann, dass in ungünstiger bzw. unerwünschter Weise aufeinanderfolgende Basispitches ausgeschlossen sind.

Eine weitere erfindungsgemäße Maßnahme, die für das Entstehen eines günstigen Reifen/Fahrbahngeräusches vorteilhaft ist, besteht darin, dass die zu einer Art von Basispitch gehörenden Pitches auf jeweils übereinstimmende Weise in zwei Teilpitches gegliedert sind.

Auf eine besonders übersichtliche, einfache und trotzdem sehr wirkungsvolle Weise lässt sich gemäß der Erfindung ein Profiltyp gliedern, bei dem die ersten Profilstrukturen Rillen und die zweiten Profilstrukturen Quernuten sind, wobei, in Umfangsrichtung betrachtet, jeweils eine Quernut, die zwei in Umfangsrichtung aufeinander folgende Rillen kreuzt, und mit einer Quernut, die jeweils eine Rille kreuzt, abwechselt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf eine Teilabwicklung eines erfindungsgemäß ausgeführten Laufstreifenprofils und
Fig. 2 bis Fig. 5 Draufsichten auf zwar gleichartig, in einigen Abmessungen jedoch unterschiedlich ausgeführte Profilabschnitte (Pitches).

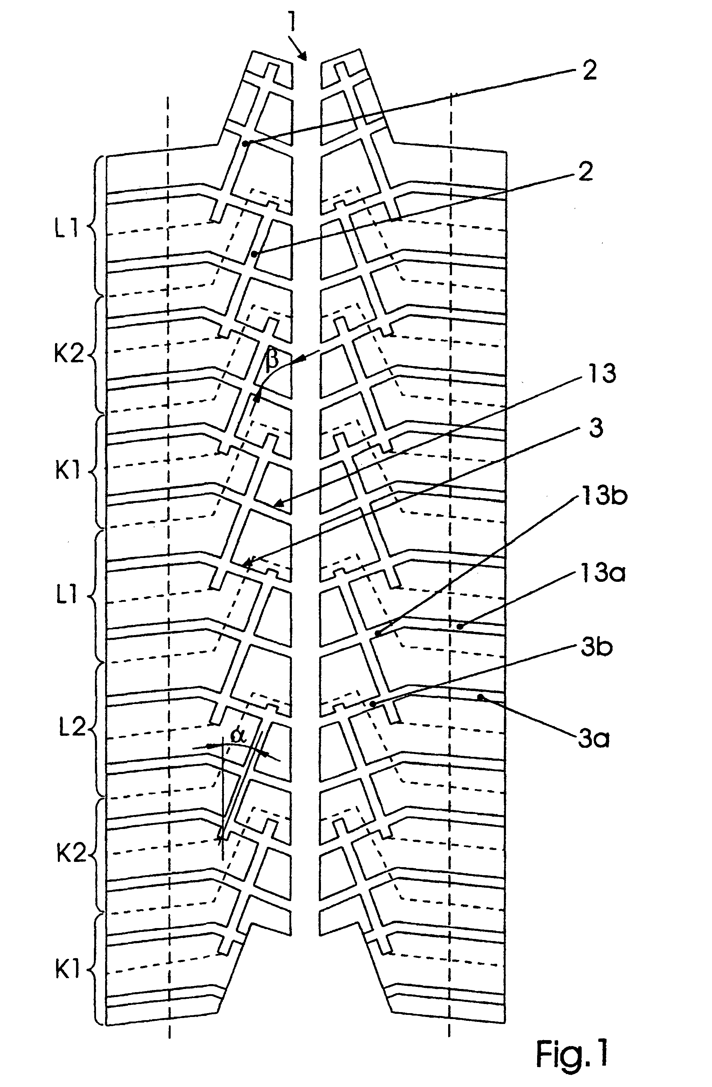

Die Erfindung befasst sich mit einer bestimmten Art der Aufeinanderfolge und Ausführung von Pitches - sich über den Umfang des Laufstreifens wiederholenden und gleichartig ausgeführten Profilabschnitten - für bestimmte Typen von Laufstreifenprofilen. Fig. 1 zeigt schematisch eine der möglichen Varianten dieses Typs. Das dargestellte Laufstreifenprofil, welches insbesondere für PKW-Reifen geeignet ist, weist eine zentrale mittlere Umfangsnut 1 auf, an welche beidseitig übereinstimmend ausgeführte Laufstreifenbereiche anschließen, die jeweils bis über den strichliert eingezeichneten Laufstreifenrand, der die seitliche Begrenzung für die Bodenaufstandsfläche eines Reifens mit einem derartigen Profil unter Normbedingungen (Nenndruck, Nennlast, Standardfelge) bildet, hinaus reichen. Auf Grund der übereinstimmenden Ausführung der beiden an die zentrale Umfangsnut 1 anschließenden Laufstreifenbereiche wird in der nachfolgenden Beschreibung vorrangig auf den in Fig. 1 links neben der Umfangsnut 1 verlaufenden Laufstreifenbereich Bezug genommen.

Charakteristisch für den angesprochenen Typ von Laufstreifenprofilen ist die kreuzende Anordnung von zwei Profilstrukturen, die Rippen oder Rillen bzw. Nuten sein können, wobei die einen Profilstrukturen unter einem Winkel α zur Umfangsrichtung verlaufen können, der maximal 40° beträgt. Bei der dargestellten Ausführungsform sind diese Profilstrukturen zur Umfangsrichtung unter einem spitzen Winkel α von ca. 20° geneigte Rillen 2, die diese kreuzende Profilstrukturen sind Quernuten 3, 13. Die Rillen 2 prägen die Profilstruktur im mittleren Bereich des Laufstreifens, indem sie eine Länge von beispielsweise 6 bis 10 cm aufweisen, wobei bei einem bestimmten Profil sämtliche Rillen 2 zumindest im Wesentlichen übereinstimmende Längen aufweisen. Die Rillen 2 enden in einem geringen Abstand vor der Umfangsnut 1 und erstrecken sich geringfügig über die Mitte des jeweiligen Laufstreifenbereiches. Mit den Rillen 2 kreuzen sich abwechselnd die Quernuten 3 und 13, wobei bei der dargestellten Ausführungsform jede Quernut 3 zwei in Umfangsrichtung benachbarte Rillen 2 kreuzt und jede Quernut 13 zwischen je zwei in Umfangsrichtung benachbarten Quernuten 3 verlaufend jeweils nur eine Rille 2 kreuzt.

Die zumindest im Wesentlichen zueinander parallel verlaufenden Quernuten 3,13 weisen jeweils zwei Abschnitte 3a, 3b, 13a, 13b auf, von welchen die Abschnitte 3b, 13b, beginnend bei der zentralen Umfangsnut 1, gegensinnig zu den Rillen 2 unter einem Winkel β von etwa 70° zur Umfangsrichtung verlaufen, auf Höhe der laufstreifenaußenseitigen Enden der Rillen 2 abgeknickt sind und derart in ihre zweiten Quernutabschnitte 3a, 13a übergehen, die unter einem von der Querrichtung nur geringfügig abweichenden Winkel über die Laufstreifenränder hinaus verlaufen.

Die derart strukturierten Laufstreifenbereiche, hier die beiden Laufstreifenhälften, sind in Basispitches L1, L2, K1, K2 gegliedert, indem jeweils eine der Rillen 2 auf bestimmte Wiese komplett in ein Basispitch L1, L2,K1, K2 eingegliedert ist.

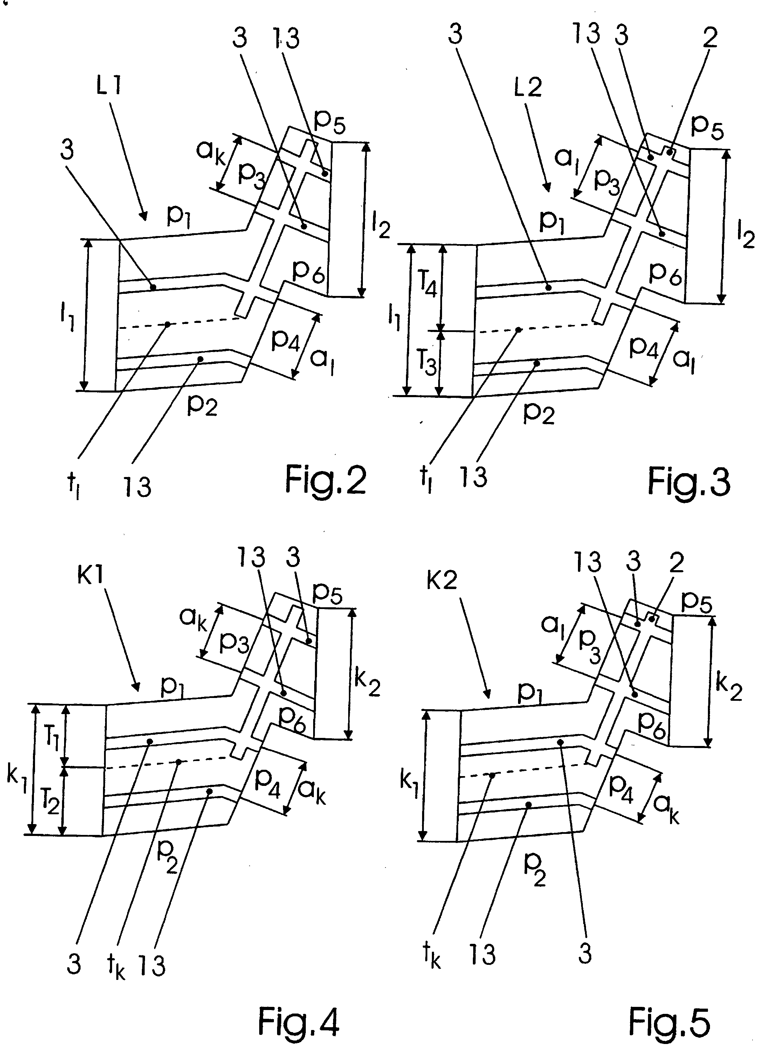

Die einzelnen Basispitches L1, L2 und K1, K2 sind paarweise deckungsgleich ausgeführt, wobei sich die Paare L1, L2 und K1, K2 voneinander durch ihre Umfangserstreckung unterschieden. Die Basispitches L1, L2 weisen eine größere Umfangserstreckung bzw. Umfangslänge auf als die Basispitches K1, K2. Die Umfangserstreckung wird in den Basispitches L1, L2 und K1, K2 jeweils durch zwei in Umfangsrichtung des Laufstreifenprofils verlaufende Pitchgrenzabschnitte l₁, l₂ bzw. k₁, k₂ bestimmt, wobei l₁ und k₁ jeweils dem Laufstreifenrand und l₂, k₂ jeweils der Umfangsnut 1 benachbart verlaufen. Dabei ist l₂ > k₂ und l₁ > k₁, wobei dies die einzigen Pitchgrenzabschnitte sind, in welchen sich die längeren Basispitches L1, L2 von den kürzeren Basispitches K1, K2 unterscheiden. Auf den Verlauf der weiteren, für sämtliche Basispitches L1, L2 bzw. K1, K2 gleiche Pitchgrenzabschnitte wird nun anhand des in Fig. 2 gezeigten Basispitch L1 eingegangen.

Die an den Pitchgrenzabschnitt l₁ anschließenden Pitchgrenzabschnitte p₁, p₂ verlaufen parallel zueinander und parallel zu jenen Quernutabschnitten 3a, 13a der beiden einander benachbarten Quernuten 3, 13, die sie zwischen sich einschließen. An die Pitchgrenzabschnitte p₁ und p₂ schließen laufstreifeninnenseitig gleich lang ausgeführte Grenzabschnitte p₃, p₄ an, die parallel zueinander und parallel zu den Rillen 2 verlaufen. Die Pitchgrenzabschnitte p₃ und p₄ durchtrennen dabei jeweils zwei einander benachbarte Quernutabschnitte 3b, 13b. An die Pitchgrenzabschnitte p₃, p₄ schließen ebenfalls parallel zueinander verlaufende und gleich lang ausgeführte Pitchgrenzabschnitte p₅, p₆ an, die im Wesentlichen parallel zu den Quernutabschnitten 3b, 13b orientiert sind und bis zur Umfangsnut 1 reichen. Jede Rille 2 in einem Basispitch L1, L2 wird somit von Pitchgrenzabschnitten l₁, p₃, p₅, l₂, p₆ und p₄ umlaufen bzw. umschlossen. In einem Basispitch K1, K2 treten die kürzeren Umfangslängen k₁ und k₂ an die Stelle der Umfangslängen l₁ und l_{2.}

In jedem kurzen Basispitch K1, K2 und in jedem Basispitch L1, L2 stimmen jeweils im Bereich zwischen den Pitchgrenzabschnitten p₁ und p₂ der gegenseitige Abstand der Quernutabschnitte 3a und 13a und auch deren Verlauf überein. Dabei ist der gegenseitige Abstand der Quernutabschnitte 3a und 13a in den kürzeren Basispitches K1, K2 geringer gewählt als in den beiden längeren Basispitches L1, L2. Am Pitchgrenzabschnitt p₄, wo die Quernutabschnitte 3b, 13b durchtrennt sind, beträgt der gegenseitige Abstand in einem Basispitch K1, K2 jeweils aₖ, in einem Basispitch L1, L2 jeweils aₗ. Jene Teile der Quernutabschnitte 3b, 13b, die zwischen den Pitchgrenzabschnitten l₁ und p₃ (in den Basispitches L1, L2) bzw. k₁ und p₃ (in den Basispitches K1, K2) verlaufen, haben am Pitchgrenzabschnitte p₃ einen gegenseitigen Abstand, welcher in einem Basispitch K1 jeweils aₖ, in einem Basispitch K2 jeweils aₗ, in einem Basispitch L1 jeweils aₖ und in einem Basispitch L2 jeweils a, beträgt. Diese spezielle Ausgestaltung erlaubt nun ganz bestimmte Kombinationen der Aufeinanderfolge der Basispitches L1, L2, K1, K2 über den Reifenumfang. Auf jedes lange Basispitch L1 oder L2 kann nur ein Basispitch K2 oder L2 folgen, auf jedes kurzes Basispitch K1 oder K2 kann nur ein Basispitch K1 oder L1 folgen.

Zwischen den Pitchgrenzabschnitten p₁, p₂ werden ferner in jedem langen Basispitch L1, L2 und in jedem kurzen Basispitch K1, K2 durch die strichliert eingezeichneten Tennunglinien tₗ und tₖ Teilpitches mit Umfangslängen T₁, T₂ (in den Basispitches K1, K2) bzw. T₃, T₄ (in den Basispitches L1, L2) gebildet. Die laufstreifenrandseitig gemessenen Umfangslängen T₁ bis T₄ sind derart gewählt, dass T₁ < T₂ und T₃ < T₄. Die Teilpitches der Umfangslängen T₁ und T₄ schließen dabei jeweils an einen Pitchgrenzabschnitt p₁ an.

Der ungünstige Fall, dass ein Teilpitch der Länge T₄ unmittelbar an ein Teilpitch der Länge T₁ anschließen könnte, ist durch die Abstimmung der Abstände aₖ und aₗ ausgeschlossen.

Die Pitchfolge, die Aufeinanderfolge der einzelnen Basispitches K1, K2, L1, L2 über den Reifenumfang, kann, unter Einhaltung der oben erwähnten Bedingungen, dass auf jedes Basispitch L1, L2 nur ein Basispitch K1, L2 und auf jedes Basispitch K1, K2 nur ein Basispitch K1 oder L1 folgen kann, rechnerisch unter Bedachtnahme auf ein günstiges Abrollgeräusch ermittelt werden.

Die Erfindung ist auf das dargestellte Ausführungsbeispiel nicht eingeschränkt. So lässt sich die Erfindung auch auf anders gestaltete Profile anwenden, soferne unter einem vergleichsweise kleinen Winkel zur Umfangsrichtung verlaufende erste Profilstrukturen vorgesehen sind, die von zweiten Profilstrukturen geschnitten werden oder in welche zweite Profilstrukturen münden. Es sind ferner Ausführungen möglich, bei denen die ersten Profilstrukturen von mehr als drei zweiten Profilstrukturen geschnitten werden. In diesem Fall kann eine größere Anzahl von unterschiedlichen, erfindungsgemäß ausgeführten und angeordneten Basispitches gewählt werden.

## Patentansprüche

1. Fahrzeugreifen mit einem Laufstreifenprofil, mit zumindest einem in Umfangsrichtung umlaufenden Laufstreifenbereich, in welchem erste Profilstrukturen, beispielsweise Rippen oder Rillen, angeordnet sind, die unter einem von der Umfangsrichtung bis zu 40° abweichenden Winkel orientiert sind, wobei in kreuzender Anordnung zu den ersten Profilstrukturen zweite Profilstrukturen, insbesondere Quernuten, vorgesehen sind, und wobei die ersten und die zweiten Profilstrukturen in Umfangsrichtung aufeinander folgende gleichartige Pitches unterschiedlicher Umfangslängen bilden, wobei
mindestens zwei Arten von Basispitches (K1, K2 bzw. L1, L2) vorgesehen sind, wobei sich die Arten von Basispitches (K1, K2 bzw. L1, L2) voneinander durch unterschiedliche Umfangslängen unterscheiden und die zu einer Art gehörenden Basispitches (K1, K2 bzw. L1, L2) deckungsgleich, bezüglich des Verlaufs ihrer Profilstrukturen (2, 3, 13) jedoch unterschiedlich ausgeführt sind, wobei jedes Basispitch (K1, K2, L1, L2) zweite Profilstrukturen (3, 13), die jeweils in bestimmten gegenseitige Abständen (aₖ, aₗ) verlaufen, an Pitchgrenzen teilt, **dadurch gekennzeichnet, dass** jedes Besispitch (K1, K2, L1, L2) jeweils eine der ersten Profilstrukturen komplett (2) einschließt.

2. Fahrzeugreifen nach Anspruch 1, **dadurch gekennzeichnet, dass** von den zweiten Profilstrukturen (3, 13) zumindest zwei an einem der Laufstreifenmitte zugewandten Pitchgrenzabschnitt (p₄) und zumindest zwei an einem dem Laufstreifenrand zugewandten Pitchgrenzabschnitt (p₃) geteilt sind.

3. Fahrzeugreifen nach Anspruch 1 oder 2, **dadurch gekennzeichnet, dass** der gegenseitige Abstand bzw. die gegenseitigen Abstände (aₖ, aₗ) der an einem der Laufstreifenmitte zugewandten Pitchgrenzabschnitt (p₄) geteilten zweiten Profilstrukturen (3, 13) innerhalb einer Art von Basispitches (K1, K2 bzw. L1, L2) jeweils übereinstimmend ist bzw. sind.

4. Fahrzeugreifen nach einem der Ansprüche 1 bis 3, **dadurch gekennzeichnet, dass** der gegenseitige Abstand bzw. die gegenseitigen Abstände (aₖ, aₗ) der an einem dem Laufstreifenrand zugewandten Pitchgrenzabschnitt (p₃) geteilten zweiten Profilstrukturen (3, 13) in den Pitches einer Art von Basispitches (K1, K2 bzw. L1, L2) verschieden ist bzw. sind, aber mit zumindest einer Art von gegenseitigem Abstand bzw. gegenseitigen Abständen (aₖ, aₗ) der zweiten Profilstrukturen (3,13), die an dem der Laufstreifenmitte zugewandten Pitchgrenzabschnitt (p₄) geteilt sind, übereinstimmt.

5. Fahrzeugreifen nach einem der Ansprüche 1 bis 4, **dadurch gekennzeichnet, dass** die zu einer Art von Basispitch (K1, K2 bzw. L1, L2) gehörenden Pitches auf jeweils übereinstimmende Weise in zwei Teilpitches (T1, T2 bzw. T3, T4) gegliedert sind.

6. Fahrzeugreifen nach einem der Ansprüche 1 bis 5, **dadurch gekennzeichnet, dass** die ersten Profilstrukturen Rillen (2) und die zweiten Profilstrukturen Quernuten (3,13) sind, wobei, in Umfangsrichtung betrachtet, jeweils eine Quernute (3), die zwei in Umfangsrichtung aufeinander folgende Rillen (2) kreuzt, mit einer Quernut (13), die jeweils eine Rille (2) kreuzt, abwechselt.

## Claims

1. Vehicle tyre having a tread pattern with at least one tread zone running circumferentially in which first tread pattern structures such as ribs or grooves are arranged, which are oriented at an angle departing by up to 40° from the circumferential direction, second tread pattern structures, in particular transverse channels, being provided in an intersecting arrangement with the first tread pattern structures, and the first and second tread pattern structures circumferentially forming successive similar pitches of differing circumferential lengths, at least two types of base pitches (K1, K2 and L1, L2) being provided, the types of base pitches (K1, K2 and L1, L2) being distinguished from one another by their different circumferential lengths and the base pitches (K1, K2 and L1, L2) of one type being congruent but differing in the course of their tread pattern structures (2, 3, 13), each base pitch (K1, K2, L1, L2) at pitch boundaries dividing second tread pattern structures (3, 13), each running at specific intervals (aₖ, aₗ) from one another, **characterized in that** each base pitch (K1, K2, L1, L2) in each case completely encloses one of the first tread pattern structures (2).

2. Vehicle tyre according to Claim 1, **characterized in that** at least two of the second profile structures (3, 13) are divided at a pitch boundary section (p₄) facing the centre of the tread and at least two are divided at a pitch boundary section (p₃) facing the edge of the tread.

3. Vehicle tyre according to Claim 1 or 2, **characterized in that** the reciprocal interval or the reciprocal intervals (aₖ, aₗ) of the second tread pattern structures (3, 13) divided at a pitch boundary section (p₄) facing the centre of the tread is/are in each case congruent within a type of base pitches (K1, K2 and L1, L2).

4. Vehicle tyre according to any one of Claims 1 to 3, **characterized in that** the reciprocal interval or the reciprocal intervals (aₖ, aₗ) of the second tread pattern structures (3, 13) divided at a pitch boundary section (p₃) facing the edge of the tread differ(s) in the pitches of a type of base pitches (K1, K2 and L1, L2), but is/are congruent with at least one type of reciprocal interval or reciprocal intervals (aₖ, aₗ) of the second tread pattern structures, (3, 13), which are divided at the pitch boundary section (p₄) facing the centre of the tread.

5. Vehicle tyre according to any one of Claims 1 to 4, **characterized in that** the pitches of a type of base pitch (K1, K2 and L1, L2) are in each case correspondingly divided into two sub-pitches (T1, T2 and T3, T4).

6. Vehicle tyre according to any one of Claims 1 to 5, **characterized in that** the first tread pattern structures are grooves (2) and the second tread pattern structures are transverse channels (3, 13), a transverse channel (3) intersecting two circumferentially successive grooves (2) in each case alternating circumferentially with a transverse channel (13) intersecting one groove (2).

## Revendications

1. Pneumatique pour véhicule comprenant un profil de bande de roulement avec au moins une région de bande de roulement s'étendant dans la direction périphérique, dans laquelle sont prévues des premières structures profilées, par exemple des nervures ou des gorges, qui sont orientées suivant un angle s'écartant jusqu'à 40° de la direction périphérique, des deuxièmes structures profilées, notamment des rainures transversales, étant prévues suivant un agencement croisé par rapport aux premières structures profilées, et les premières et deuxièmes structures profilées formant dans la direction périphérique des pas analogues successifs de longueurs périphériques différentes,
au moins deux types de pas de base (K1, K2 ou L1, L2) étant prévus, les types de pas de base (K1, K2 ou L1, L2) se distinguant les uns des autres par des longueurs périphériques différentes et les pas de base (K1, K2 ou L1, L2) appartenant à un type particulier étant réalisés en coïncidence, mais différemment par rapport à l'allure de leurs structures profilées (2, 3, 13), chaque pas de base (K1, K2, L1, L2) partageant deux structures profilées (3, 13), qui s'étendent respectivement à des distances mutuelles déterminées (aₖ, aₗ) au niveau de limites de pas,
**caractérisé en ce que** chaque pas de base (K1, K2, L1, L2) inclut à chaque fois complètement (2) l'une des premières structures profilées.

2. Pneumatique pour véhicule selon la revendication 1, **caractérisé en ce qu'**au moins deux des deuxièmes structures profilées (3, 13) sont partagées au niveau d'une portion de limite de pas (p₄) tournée vers le centre de la bande de roulement et au moins deux sont partagées au niveau d'une portion de limite de pas (p₃) tournée vers le bord de la bande de roulement.

3. Pneumatique pour véhicule selon la revendication 1 ou 2, **caractérisé en ce que** la distance mutuelle ou les distances mutuelles (aₖ, aₗ) des deuxièmes structures profilées (3, 13) partagées au niveau d'une portion de limite de pas (p₄) tournée vers le centre de la bande de roulement coïncide ou coïncident respectivement à l'intérieur d'un type de pas de base (K1, K2 ou L1, L2).

4. Pneumatique pour véhicule selon l'une quelconque des revendications 1 à 3, **caractérisé en ce que** la distance mutuelle ou les distances mutuelles (aₖ, aₗ) des deuxièmes structures profilées (3, 13) partagées au niveau d'une portion de limite de pas (p₃) tournée vers le bord de la bande de roulement est différente ou sont différentes dans les pas d'un type de pas de base (K1, K2 ou L1, L2), mais coïncide (nt) avec au moins un type de distance mutuelle ou de distances mutuelles (aₖ, aₗ) des deuxièmes structures profilées (3, 13) qui sont partagées au niveau de la portion de limite de pas (p₄) tournée vers le centre de la bande de roulement.

5. Pneumatique pour véhicule selon l'une quelconque des revendications 1 à 4, **caractérisé en ce que** les pas appartenant à un type de pas de base (K1, K2, ou L1, L2) sont divisés de manière correspondante en deux pas partiels (T1, T2 ou T3, T4).

6. Pneumatique pour véhicule selon l'une quelconque des revendications 1 à 5, **caractérisé en ce que** les premières structures profilées sont des gorges (2) et les deuxièmes structures profilées sont des rainures transversales (3, 13), où, considéré dans la direction périphérique, à chaque fois une rainure transversale (3), qui croise deux gorges (2) successives dans la direction périphérique, est alternée avec une rainure transversale (13) qui croise à chaque fois une gorge (2).
